# EUROPEAN PATENT APPLICATION

(11) **EP 4 664 953 A1**
(43) Date of publication of application: **17.12.2025**
(21) Application number: 23921080.0
(22) Date of filing: 08.02.2023
(51) Int. Cl.: H04W 8/22

(54) **TERMINAL AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2023/004173
(87) International publication number: WO 2024/166248

(57) **Abstract**

A terminal includes: a control unit configured to determine modulation methods and subcarrier spacings that are supported in a specific frequency band; and a communication unit configured to perform communications in the specific frequency band by applying the determined modulation methods and the subcarrier spacings. The control unit determines the supported modulation methods for downlink and for uplink and determines a combination of the supported subcarrier spacings.

## Description

### TECHNICAL FIELD

The present invention relates to a terminal and a communication method in a wireless communication system.

### BACKGROUND ART

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Literature 1).

In addition, in next generation systems later than 5G, discussions are being held on using capacity of the bandwidth more efficiently in order to expand the coverage, for example. In addition, discussions are being held on deploying a new frequency band in order to further improve traffic capacity.

### CITATION LIST

### Non-Patent Literature

Non-Patent Literature 1: 3GPP TS 38.300 V17.3.0 (2022-12)

### SUMMARY OF INVENTION

### TECHNICAL PROBLEM

In a case of supporting a new frequency band, several basic functions are required to be determined. For example, the radio frame structure in the frequency band is required to be determined.

The present invention has been made in view of the above points and is intended to determine the radio frame structure in accordance with the frequency band in the wireless communication system.

### SOLUTION TO PROBLEM

According to the disclosed technique, a terminal is provided. The terminal includes: a control unit configured to determine modulation methods and subcarrier spacings that are supported in a specific frequency band; and a communication unit configured to perform communications in the specific frequency band by applying the determined modulation methods and the subcarrier spacings. The control unit determines the supported modulation methods for downlink and for uplink and determines a combination of the supported subcarrier spacings.

### ADVANTAGEOUS EFFECTS OF INVENTION

According to the disclosed technique, the radio frame structure in accordance with the frequency band can be determined in the wireless communication system.

### BRIEF DESCRIPTION OF DRAWINGS

[Fig. 1] is a drawing illustrating an example of a configuration of a wireless communication system.
[Fig. 2] is a drawing illustrating an example of a new frequency band related to an embodiment of the present invention.
[Fig. 3] is a sequence diagram for describing an operation example in a new frequency band related to an embodiment of the present invention.
[Fig. 4] is a drawing illustrating an example of a functional structure of a base station 10 related to an embodiment of the present invention.
[Fig. 5] is a drawing illustrating an example of a functional structure of a terminal 20 related to an embodiment of the present invention.
[Fig. 6] is a drawing illustrating an example of a hardware structure of the base station 10 or the terminal 20 related to an embodiment of the present invention.
[Fig. 7] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, an expression about radio (wireless) parameters or the like being "configured (set)" may mean that a predetermined value is pre-configured, or may mean that a radio parameter indicated by a base station 10 or a terminal 20 is configured.

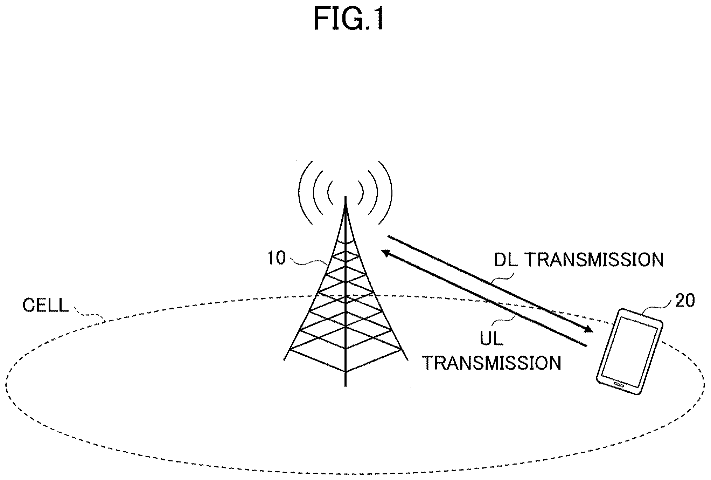

Fig. 1 is a drawing illustrating a configuration example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 is capable of performing carrier aggregation in which a plurality of cells (a plurality of CCs (Component Carrier)) are bundled for performing communication with the base station 10. In the carrier aggregation, one PCell (Primary cell) and one or more SCells (Secondary cell) are used. In addition, PUCCH-SCell having PUCCH may be used.

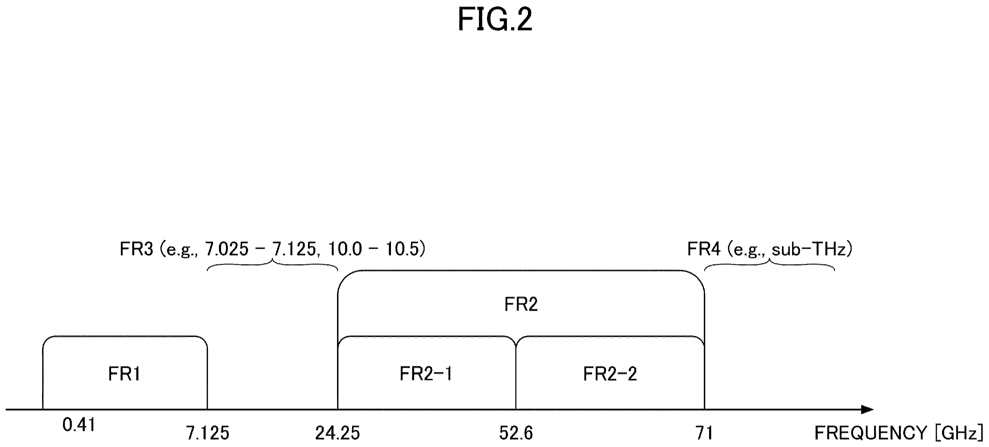

Fig. 2 is a drawing illustrating an example of a new frequency band related to an embodiment of the present invention. As a candidate of the new frequency band, as illustrated in Fig. 2, frequency bands located between FR1 (Frequency Range 1) and FR2 (Frequency Range 2) are expected to be supported. For example, frequency bands of 7.025 GHz to 7.125 GHz and 10.0 GHz to 10.5 GHz may be newly supported. The above-described frequency bands may be referred to as, for example, FR3 (Frequency Range 3) or may be referred to as other names.

In addition, as a candidate of the new frequency band, a frequency band that exceeds FR2 is expected to be supported. For example, a frequency band of 72 GHz to 100 GHz or higher may be newly supported. The above-described frequency band may be referred to as, for example, FR4 (Frequency 4) or may be referred to as other names.

FR3 is more likely to be supported and is being discussed to be used for IMT in the World Radio communication Conference (WRC) - 23. In addition, with respect to the frequencies, FR3 is lower than FR2, and thus, the practicability of FR3 is considered to be higher than that of FR2.

In a case of supporting a new frequency band, several basic functions are required to be determined. For example, the frame structure, the initial access procedure, the physical layer control, the scheduling specifications, the HARQ (Hybrid automatic repeat request) specifications, the MIMO specifications, and the like are required to be determined.

For example, the frame structure that is to be determined includes channel bandwidths, waveforms, and subcarrier spacings. Accordingly, channel bandwidths, waveforms, or subcarrier spacings may be determined as described below.

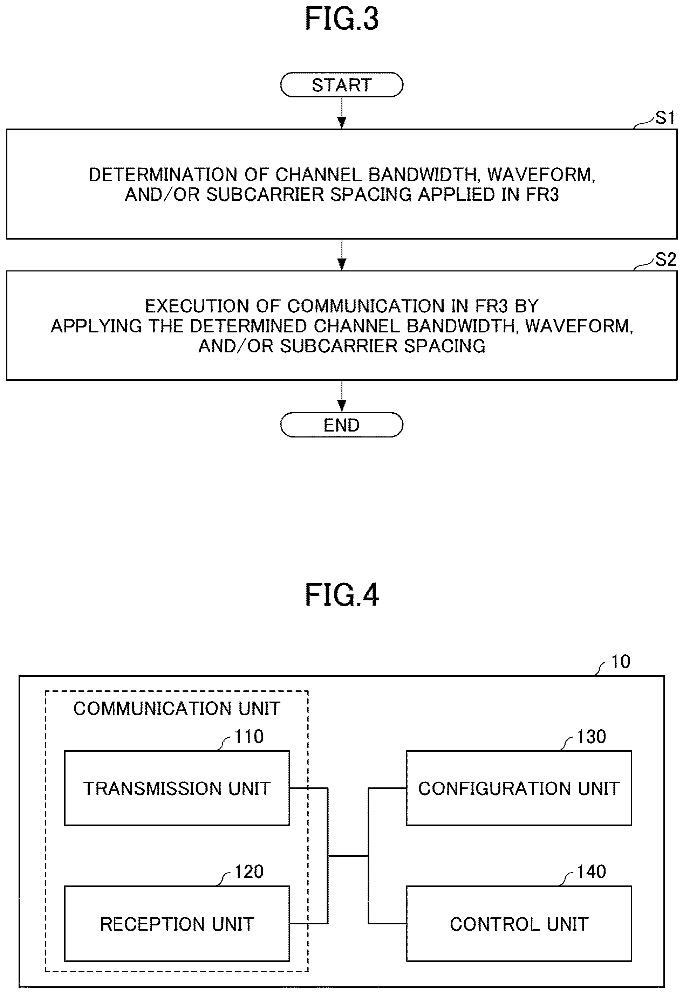

Fig. 3 is a sequence diagram for describing an operation example in a new frequency band related to an embodiment of the present invention. In step S1, the terminal 20 determines channel bandwidths, waveforms, and/or subcarrier spacings that are to be applied in FR3. In subsequent step S2, the terminal 20 performs communications in FR3 by applying the determined channel bandwidths, waveforms, and/or subcarrier spacings.

Hereinafter, an operation of determining the channel bandwidths will be described.

A set of channel bandwidths supported in FR3 may be the following 1) to 3).
1) May be a set of the same channel bandwidths as FR1. In this case, the impact on the technical specifications and implementation can be smaller.
2) May be a set of the same channel bandwidths as FR2. In this way, the impact on the technical specifications and implementation can be smaller.
3) May be a set of channel bandwidths that are different from FR1 and/or FR2. In this way, the optimized channel bandwidths can be used.

In FR3, the channel bandwidths may be at least one of the following 1) to 3).
1) May be included in a range from 100 MHz to 400 HHz. For example, the channel bandwidths may be {400, 300, 200, 190, 180, 175, 170, 160, 150, 140, 130, 125, 120, 110, 100} [MHz]. In this case, the balance between the throughput obtained by wider bandwidths and the frequency multiplexing capacity obtained by narrower bandwidths can be achieved.
2) May be equal to or less than 100 MHz. For example, the channel bandwidth that is the same as the channel bandwidth supported in FR1 may be supported. In this case, flexible coexistence between different operators can be achieved.
3) May be equal to or greater than 400 MHz. For example, the channel bandwidths may be 500 MHz. In this case, the higher throughput achieved by wider bandwidths can be expected.

It is to be noted that a set of the channel bandwidths that can be used in FR1 or FR2 may be partially or entirely usable in FR3.

In addition, for example, the channel bandwidths supported in FR3 may be one or more bandwidths that are over 100 MHz and one or more bandwidths that are equal to or lower than 100 MHz.

In addition, for example, the channel bandwidths supported in FR3 may be one or more bandwidths that are less than 50 MHz and one or more bandwidths that are equal to or greater than 50 MHz.

In addition, for example, the channel bandwidths supported in FR3 may be a part of or all of the following 1) to 3).
1) One or more bandwidths that are less than 50 MHz.
2) One or more bandwidths between 50 MHz to 100 MHz.
3) One or more bandwidths that are greater than 100 MHz.

In addition, for example, the maximum channel bandwidth supported in FR3 may be a part of or all of the following 1) to 3).
1) 100 MHz. In this case, flexible coexistence between different operators can be achieved.
2) Bandwidths that are greater than 100 MHz and less than 400 MHz. For example, 150 MHz, 200 MHz, or 300 MHz. In this case, the throughput that is larger than FR1 can be achieved.
3) 400 MHz. In this case, the throughput that is equal to FR2 can be achieved.

In addition, for example, the minimum channel bandwidth supported in FR3 may be a part of or all of the following 1) to 4).
1) 5 MHz. In this case, flexible coexistence between different operators can be achieved.
2) Bandwidths that are greater than 5 MHz and less than 50 MHz. In this case, the synchronization raster that is less than that of FR1 can be achieved.
3) 50 MHz. In this case, the synchronization raster that is less than that of FR1 can be achieved.
4) Bandwidth that is greater than 50 MHz. In this case, the synchronization raster that is less than that of FR2 can be achieved.

For example, the maximum channel bandwidth and/or the minimum channel bandwidth that are/is supported in FR3 may be different depending on the band.

For example, in the band from 7.025 GHz to 7.125 GHz, the maximum channel bandwidth and/or the minimum channel bandwidth from 5 MHz to 100 MHz may be supported, and in the band from 10.0 GHz to 10.5 GHz, the maximum channel bandwidth and/or the minimum channel bandwidth from 20 MHz to 200 MHz may be supported.

In addition, for example, the number of channel bandwidth candidates supported in FR3 may be a part of or all of the following 1) to 3).
1) The number of channel bandwidth candidates greater than 10 may be supported. In this case, the flexible band structure and the coexistence can be achieved between UEs or between operators.
2) The number of channel bandwidth candidates from 4 to 10 may be supported. In this case, the reduction of the number of test patterns and/or reduction of the fragmentation of UE capability can be achieved as compared with FR1.
3) The number of channel bandwidth candidates less than 4 may be supported. In this case, the reduction of the number of test patterns and/or reduction of the fragmentation of UE capability can be achieved as compared with FR2.

In addition, in FR3, whether the support of a channel bandwidth is to be mandatory or optional may be defined as follows.

For example, the mandatory channel bandwidths supported in FR3 may be defined as one of the following 1) to 3).
1) The same set of channel bandwidths as FR1 may be supported as mandatory.
2) The same set of channel bandwidths as FR2 may be supported as mandatory.
3) The set of channel bandwidths different from FR1 and/or FR2 may be supported as mandatory.

For example, whether a channel bandwidth that is defined or supported in FR3 is to be mandatory or optional may be specified as described in one of the following 1) to 9).
1) N channel bandwidths in the ascending order from the smallest channel bandwidth may be specified to be supported as mandatory and the remaining channel bandwidths may be specified to be supported as optional. In this case, the implementation load of a UE that uses FR3 can be reduced. N may be defined in the technical specification, and may be equal to 1, 2, 3, 4, 5, or the like, for example.
2) The support of channel bandwidths that are equal to or less than X MHz may be specified as mandatory and the support of the remaining channel bandwidths may be specified as optional. In this case, the implementation load of a UE that uses FR3 can be reduced. N may be defined in the technical specification, and may be equal to 5, 10, 20, 30, 40, 50, 100, or the like, for example.
3) The support of N channel bandwidths in the descending order from the largest channel bandwidth may be specified as mandatory and the support of the remaining channel bandwidths may be specified as optional. In this case, the improvement of the system performance can be expected. N may be defined in the technical specification, and may be equal to 1, 2, 3, 4, 5, or the like, for example.
4) The support of channel bandwidths that are equal to or greater than X MHz may be specified as mandatory and the support of the remaining channel bandwidths may be specified as optional. In this case, the improvement of the system performance can be expected. N may be defined in the technical specification, and may be equal to 5, 10, 20, 30, 40, 50, 100, or the like, for example.
5) The support of a specific channel bandwidth may be specified as mandatory and the support of other channel bandwidths may be specified as optional. The specific channel bandwidth may be flexibly configured such as small, medium, or large. For example, the specific channel bandwidth may be, similar to FR1, a channel bandwidth less than 50 MHz, may be a channel bandwidth from 50 MHz to 100 MHz that is specific to FR3, or may be, similar to FR2, a channel bandwidth exceeding 100 MHz.
6) The support of all channel bandwidths specified in FR3 may be specified as mandatory.
7) The support of all channel bandwidths specified in FR3 may be specified as optional.
8) The minimum number of channel bandwidths that are supported as mandatory may be specified without restricting the channel bandwidth value. For example, the support of at least one channel bandwidth may be specified as mandatory, or the support of at least three channel bandwidths may be specified as mandatory.
9) The maximum number of channel bandwidths that are supported as mandatory may be specified without restricting the channel bandwidth value. For example, the support of no more than five channel bandwidths may be specified as mandatory.

In addition, in FR3, CP-OFDM (Cyclic-Prefix OFDM) and/or DFT-S-OFDM (Discrete Fourier Transform - Spread - OFDM) may be supported.

For example, in FR3, similar to FR1 and FR2, CP-OFDM may be supported for downlink, and CP-OFDM and DFT-S-OFDM may be supported for uplink.

For example, in FR3, waveforms that are different from FR1 or FR2 may be supported.

Table 1 illustrates an example of waveforms that are supported in FR3.

**[Table 1]**

| Alt# | DL | | UL | |
|---|---|---|---|---|
| | CP-OFDM | DFT-S-OFDM | CP-OFDM | DFT-S-OFDM |
| Alt-1 | Yes | No | Yes | Yes |
| Alt-2 | Yes | Yes | Yes | Yes |
| Alt-3 | Yes | No | Yes | No |
| Alt-4 | Yes | Yes | Yes | No |
| Alt-5 | Yes | Yes | No | Yes |
| Alt-6 | Yes | No | No | Yes |
| Alt-7 | No | Yes | Yes | Yes |
| Alt-8 | No | Yes | Yes | No |
| Alt-9 | No | Yes | No | Yes |

As illustrated in Alt-1 in Table 1, CP-OFDM may be supported for DL and UL, and DFT-S-OFDM may be supported for UL. In this case, the implementation may be similar to FR1 and FR2.

As illustrated in Alt-2 in Table 1, CP-OFDM may be supported for DL and UL, and DFT-S-OFDM may be supported for DL and UL. The coverage can be expanded by supporting DFT-S-OFDM for DL.

As illustrated in Alt-3 in Table 1, CP-OFDM may be supported for DL and UL. In this case, the implementation load can be reduced by supporting a single waveform.

As illustrated in Alt-4 in Table 1, CP-OFDM may be supported for DL and UL, and DFT-S-OFDM may be supported for DL.

As illustrated in Alt-5 in Table 1, CP-OFDM may be supported for DL, and DFT-S-OFDM may be supported for DL and UL.

As illustrated in Alt-6 in Table 1, CP-OFDM may be supported for DL, and DFT-S-OFDM may be supported for UL.

As illustrated in Alt-7 in Table 1, CP-OFDM may be supported for UL, and DFT-S-OFDM may be supported for DL and UL.

As illustrated in Alt-8 in Table 1, CP-OFDM may be supported for UL, and DFT-S-OFDM may be supported for DL.

As illustrated in Alt-9 in Table 1, DFT-S-OFDM may be supported for DL and UL.

In addition, in FR3, with respect to a channel bandwidth to which a certain SCS is applied, the supported minimum guard band or the supported number of RBs may be as described in one of the following 1) to 3).
1) May be the same as the minimum guard band of the same channel bandwidth to which the same SCS is applied in FR1 and/or FR2. In this case, the implementation of the spectrum filtering in FR1 and/or FR2 can be reused.
2) May be a minimum guard band that is wider than the minimum guard band of the same channel bandwidth to which the same SCS is applied in FR1 and/or FR2. In this case, the implementation of the spectrum filtering can be simpler than that in FR1 and/or FR2.
3) May be a minimum guard band that is narrower than the minimum guard band of the same channel bandwidth to which the same SCS is applied in FR1 and/or FR2. In this case, the resource utilization efficiency can be improved.

It is to be noted that, in FR3, a guard band other than the minimum guard band may be defined. That is, the function of a terminal 20 that can support such a guard band is more advanced than that of a terminal 20 that supports only the minimum guard band, and the terminal 20 that can support such a guard band may be a terminal 20 that generates high quality signals enabled to reduce the interference to adjacent bands while supporting the same band.

In addition, whether or not CP-OFDM or DFT-S-OFDM is supported for DL or UL may be specified as described in one of the following 1) or 2).
1) All of the terminals 20 that support FR3 may support all of the waveforms for DL and UL. In this case, the more flexible deployment can be performed.
2) A certain terminal 20 that supports FR3 is not required to support all of the waveforms for DL or UL. In this case, the implementation load of a terminal can be reduced.

Table 2 illustrates an example of supported SCSs in FR3.

**[Table 2]**

| Alt# | 15 | 30 | 60 | 120 | 240 |
|---|---|---|---|---|---|
| Alt-1 | Yes | Yes | Yes | No | No |
| Alt-2 | No | No | Yes | Yes | Yes |
| Alt-3 | No | Yes | Yes | Yes | No |
| Alt-4 | No | Yes | Yes | No | No |
| Alt-5 | No | No | Yes | Yes | No |

As illustrated in Alt-1 in Table 2, the supported SCSs may be 15 kHz, 30 kHz, and 60 kHz. In this case, the implementation may be the same as FR1.

As illustrated in Alt-2 in Table 2, the supported SCSs may be 60 kHz, 120 kHz, and 240 kHz. In this case, the implementation may be the same as FR2.

As illustrated in Alt-3 in Table 2, the supported SCSs may be 30 kHz, 60 kHz, and 120 kHz. In this case, the implementation may be the same as FR2. In this way, a combination of SCSs optimized for FR3 can be used.

As illustrated in Alt-4 in Table 2, the supported SCSs may be 30 kHz and 60 kHz. In this case, the implementation may be the same as FR1.

As illustrated in Alt-5 in Table 2, the supported SCSs may be 60 kHz and 120 kHz. In this case, the implementation may be the same as FR2.

Table 3 illustrates an example of combinations of the maximum channel bandwidth and SCS in NR.

**[Table 3]**

| SCS [kHz] | 15 | 30 | 60 (FR1) | 60 (FR2) | 120 |
|---|---|---|---|---|---|
| # RBs | 270 | 273 | 135 | 264 | 264 |
| CBW [MHz] | 50 | 100 | 100 | 200 | 400 |

Here, in a case where the number of FFT (Fast fourier transform) points is 4,096 as in NR, the maximum number of RBs is approximately 270.

As illustrated in Table 3, in a case where SCS is 15 kHz and the channel bandwidth is 50 MHz, the maximum number of RBs is 270. In a case where SCS is 30 kHz and the channel bandwidth is 100 MHz, the maximum number of RBs is 273. In a case where SCS is 60 kHz and the channel bandwidth is 100 MHz in FR1, the maximum number of RBs is 135. In a case where SCS is 60 kHz and the channel bandwidth is 200 MHz in FR2, the maximum number of RBs is 264. In a case where SCS is 120 kHz and the channel bandwidth is 400 MHz in FR2, the maximum number of RBs is 264.

For example, in FR3, in a case where the number of FFT points is 8192, the maximum number of RBs is approximately 540. Therefore, in FR3, the maximum channel bandwidth may be twice the values illustrated in Table 3. In other words, the maximum channel bandwidth may be 100 MHz in a case where SCS is 15 kHz, may be 200 MHz in a case where SCS is 30 kHz, may be 200 MHz or 400 MHz in a case where SCS is 60 kHz, and may be 800 MHz in a case where SCS is 120 kHz.

In addition, in FR3, SCSs may be supported as described in the following 1) to 3).
1) All of the SCSs may be supported as mandatory.
2) The number of SCSs that are supported as mandatory may be restricted.
3) N SCSs in the ascending order from the smallest SCS may be supported as mandatory and N may be 1 or 2.
4) N SCSs in the descending order from the largest SCS may be supported as mandatory and N may be 1 or 2.

In addition, the supported SCSs may be determined depending on the supported maximum channel bandwidth.

For example, in a case where the channel bandwidth up to 50 MHz is supported, SCS of 15 kHz may be supported.

For example, in a case where the channel bandwidth up to 100 MHz is supported, SCS of 30 kHz may be supported.

For example, in a case where the channel bandwidth up to 200 MHz is supported, SCS of 60 kHz may be supported.

It is to be noted that the supported number of FFT points may be determined depending on the maximum channel bandwidth.

According to the above-described embodiments, the terminal 20 can determine the radio frame structure such as channel bandwidths, waveforms, subcarrier spacings, and the like depending on the frequency band and can perform communications efficiently.

In other words, the radio frame structure can be determined depending on the frequency band in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

Fig. 4 is a drawing illustrating an example of a functional structure of a base station 10 according to an embodiment of the present invention. As shown in Fig. 4, the base station 10 includes a transmission unit 110, a reception unit 120, a configuration unit 130, and a control unit 140. The functional configuration illustrated in Fig. 4 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the channel bandwidth, the waveform, and/or the subcarrier spacing.

The control unit 140 performs control that enables functions described in an embodiment of the present invention. In addition, the control unit 140 performs control related to the channel bandwidth, the waveform, and/or the subcarrier spacing as described in an embodiment of the present invention. The functional units related to signal transmission in the control unit 140 may be included in the transmission unit 110, and the functional units related to signal reception in the control unit 140 may be included in the reception unit 120.

### <Terminal 20>

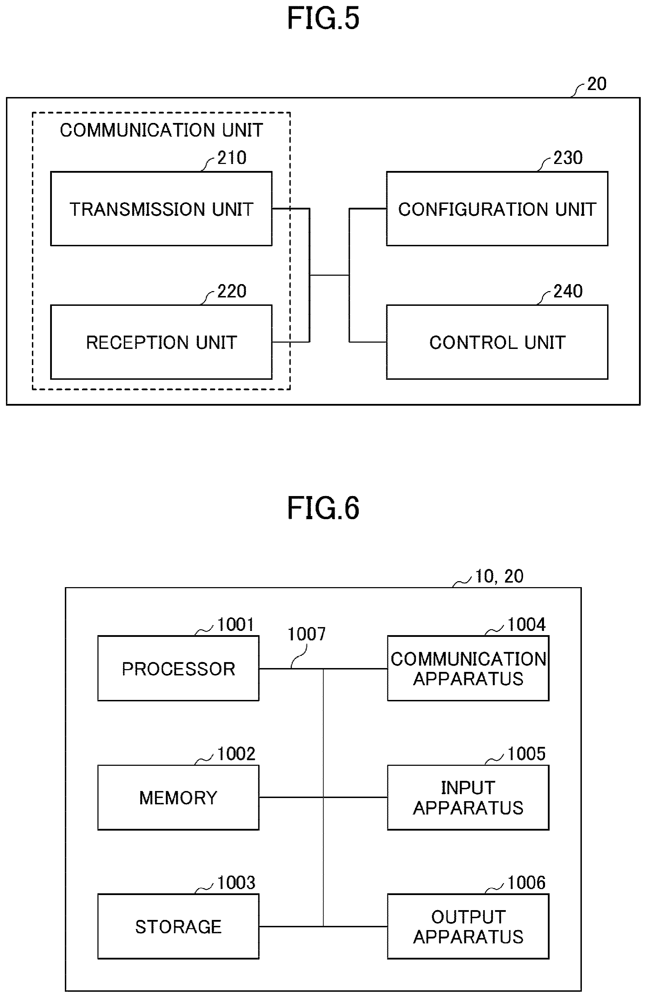

Fig. 5 is a drawing illustrating an example of a functional structure of a terminal 20 according to an embodiment of the present invention. As shown in Fig. 5, the terminal 20 includes a transmission unit 210, a reception unit 220, a configuration unit 230, and a control unit 240. The functional configuration illustrated in Fig. 5 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to the channel bandwidth, the waveform, and/or the subcarrier spacing.

The control unit 240 performs control that enables functions described in an embodiment of the present invention. In addition, the control unit 240 performs control related to the channel bandwidth, the waveform, and/or the subcarrier spacing as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 4 and Fig. 5) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

For example, the base station 10, the terminal 20, etc., according to an embodiment of the present disclosure may function as a computer for processing the radio communication method of the present disclosure. Fig. 6 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 4 may be implemented by control programs that are stored in the memory 1002 and that operate on the processor 1001. In addition, for example, the control unit 240 of the terminal 20 illustrated in Fig. 5 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

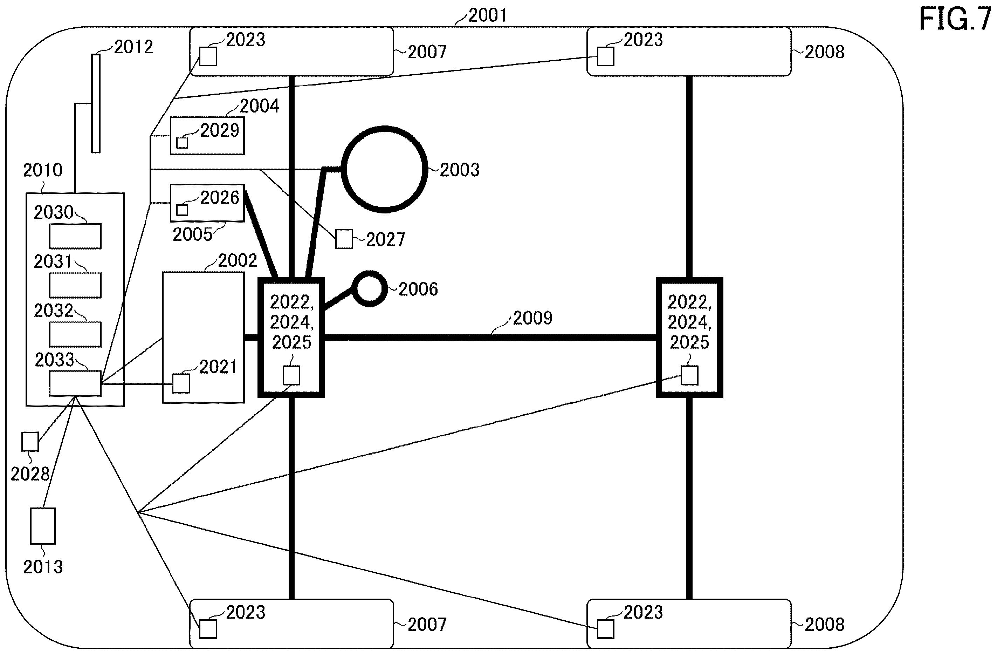

Fig. 7 shows an example of a configuration of a vehicle 2001. As shown in Fig. 7, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a control unit configured to determine modulation methods and subcarrier spacings that are supported in a specific frequency band; and a communication unit configured to perform communications in the specific frequency band by applying the determined modulation methods and the subcarrier spacings. The control unit determines the supported modulation methods for downlink and for uplink and determines a combination of the supported subcarrier spacings.

According to the above-described configuration, the terminal 20 can determine the radio frame structure such as channel bandwidths, waveforms, subcarrier spacings, and the like depending on the frequency band and can perform communications efficiently. In other words, the radio frame structure can be determined depending on the frequency band in the wireless communication system.

The control unit may determine that CP-OFDM (Cyclic-Prefix Orthogonal Frequency Division Multiplexing) is to be unsupported for downlink or for uplink. According to the above-described configuration, the terminal 20 can determine the radio frame structure such as channel bandwidths, waveforms, subcarrier spacings, and the like depending on the frequency band and can perform communications efficiently.

The control unit may determine that DFT-S-OFDM (Discrete Fourier Transform - Spread - Orthogonal Frequency Division Multiplexing) is to be supported for downlink. According to the above-described configuration, the terminal 20 can determine the radio frame structure such as channel bandwidths, waveforms, subcarrier spacings, and the like depending on the frequency band and can perform communications efficiently.

The control unit may determine three or two of the supported subcarrier spacings. According to the above-described configuration, the terminal 20 can determine the radio frame structure such as channel bandwidths, waveforms, subcarrier spacings, and the like depending on the frequency band and can perform communications efficiently.

The control unit may determine the supported subcarrier spacings, based on a supported channel bandwidth. According to the above-described configuration, the terminal 20 can determine the radio frame structure such as channel bandwidths, waveforms, subcarrier spacings, and the like depending on the frequency band and can perform communications efficiently.

In addition, according to an embodiment of the present invention, a communication method performed by a terminal is provided. The communication method includes: determining modulation methods and subcarrier spacings that are supported in a specific frequency band; performing communications in the specific frequency band by applying the determined modulation methods and the subcarrier spacings; and determining the supported modulation methods for downlink and for uplink and determining a combination of the supported subcarrier spacings.

According to the above-described configuration, the terminal 20 can determine the radio frame structure such as channel bandwidths, waveforms, subcarrier spacings, and the like depending on the frequency band and can perform communications efficiently. In other words, the radio frame structure can be determined depending on the frequency band in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling), broadcast information (MIB (Master Information Block), SIB (System Information Block)), other signals, or a combination thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a UL BWP and a DL BWP. One or a plurality of BWPs may be configured in one carrier for UE.

At least one of configured BWPs may be active, and the terminal 20 is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Power transmission device
40 Core network
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a control unit configured to determine modulation methods and subcarrier spacings that are supported in a specific frequency band; and
a communication unit configured to perform communications in the specific frequency band by applying the determined modulation methods and the subcarrier spacings, wherein
the control unit determines the supported modulation methods for downlink and for uplink and determines a combination of the supported subcarrier spacings.

2. The terminal as claimed in claim 1, wherein the control unit determines that CP-OFDM (Cyclic-Prefix Orthogonal Frequency Division Multiplexing) is to be unsupported for downlink or for uplink.

3. The terminal as claimed in claim 1, wherein the control unit determines that DFT-S-OFDM (Discrete Fourier Transform - Spread - Orthogonal Frequency Division Multiplexing) is to be supported for downlink.

4. The terminal as claimed in claim 1, wherein the control unit determines three or two of the supported subcarrier spacings.

5. The terminal as claimed in claim 1, wherein the control unit determines the supported subcarrier spacings, based on a supported channel bandwidth.

6. A communication method performed by a terminal, the communication method comprising:
determining modulation methods and subcarrier spacings that are supported in a specific frequency band;
performing communications in the specific frequency band by applying the determined modulation methods and the subcarrier spacings; and
determining the supported modulation methods for downlink and for uplink and determining a combination of the supported subcarrier spacings.
